# EUROPÄISCHE PATENTSCHRIFT

(11) **EP 0 859 968 B1**
(45) Veröffentlichungstag und Bekanntmachung des Hinweises auf die Patenterteilung: **25.02.2004**
(21) Anmeldenummer: 97934516.2
(22) Anmeldetag: 22.07.1997
(51) Int. Cl.: G02B 21/00, G02B 21/06

(54) **STRAHLUMLENKEINHEIT ZUR MEHRACHSIGEN UNTERSUCHUNG IN EINEM MIKROSKOP**
BEAM DIVERTER UNIT FOR MULTIAXIAL INVESTIGATION IN A MICROSCOPE
UNITE DE DEVIATION DE FAISCEAU POUR EXAMEN SUR PLUSIEURS AXES DANS UN MICROSCOPE

(30) Priorität: 08.08.1996 DE 19632040
(43) Veröffentlichungstag der Anmeldung: 26.08.1998
(73) Patentinhaber: CARL ZEISS JENA GmbH, 07745 Jena (DE)
(72) Erfinder: STELZER, Ernst, H., K., D-74909 Meckesheim (DE); LINDEK, Steffen, D-68723 Plankstadt (DE)
(86) Internationale Anmeldenummer: PCT/EP1997/003953
(87) Internationale Veröffentlichungsnummer: WO 1998/007059

(56) Entgegenhaltungen:
- DE-A- 3 151 837
- DE-A- 4 326 473
- US-A- 4 127 318
- US-A- 5 351 169

## Beschreibung

Die Erfindung betrifft eine Strahlumlenkeinheit zur mehrachsigen Untersuchung von Proben in einem Mikroskop, welche einerseits die Beleuchtung der Probe mit einem oder mehreren Strahlen von mehreren Seiten und/oder die Beobachtung der Probe mit einem oder mehreren Strahlen von mehreren Seiten, andererseits die Beobachtung der Probe in einem Winkel zur Beleuchtungsachse erlaubt. Die erfindungsgemäße Strahlumlenkeinheit läßt sich in verfügbaren Fernfeld-Rasterlichtmikroskopen einsetzen und befindet sich zwischen dem Mikroskopobjektiv und der Brennebene. Sie ist den Größenverhältnissen der Probe und des freien Arbeitsabstands des Objektivs angepaßt.

Aus der technisch-wissenschaftlichen Literatur sind konfokale Rasterlichtmikroskope bekannt, die eine Auflösung entlang der optischen Achse (axiale Auflösung) aufweisen und Bilder mit einer deutlich verringerten Schärfentiefe erzeugen können. Ein Problem ist, daß Mikroskopobjektive nur einen Teil des gesamten Raumwinkels erfassen und somit nur einen Teil des von einem Punkt in alle Richtungen abgestrahlten Lichts erfassen. Das führt dazu, daß die axiale Auflösung mindestens dreimal so schlecht wie die axiale Auflösung ist. Im allgemeinen ist das Verhältnis größer.

Für die zusätzliche Erhöhung der Auflösung in axialer Richtung wurde in der DE-OS 40 40 441 ein doppelkonfokales Rasterlichtmikroskop vorgeschlagen, das durch die Verwendung eines zweiten Objektivs auf der anderen Seite der Objektebene gekennzeichnet ist, wobei beide Objektive einen gemeinsamen Objektpunkt gleichzeitig beleuchten und/oder das von ihm ausgehende Licht detektieren. Wird das Objekt über die beiden Objektive kohärent beleuchtet, so wird das Beobachtungsvolumen durch Interferenz längs der optischen Achse reduziert. Die Reduzierung des Beobachtungsvolumen ist mit einer Verbesserung der Auflösung gleichbedeutend.

Des weiteren ist aus der DE-OS 43 26 473 ein Rasterlichtmikroskop bekannt, bei dem mindestens zwei Objektive derart angeordnet sind, daß sie einen Objektpunkt gleichzeitig beleuchten und/oder das von ihm ausgehende Licht sammeln, wobei mindestens zwei der Objektive nicht auf einer gemeinsamen Achse liegen. Zusätzlich können wie bei einem doppelkonfokalen Rasterlichtmikroskop Interferenzveränderungsmittel derart angeordnet sein, daß Licht, das durch eines der Objektive hindurchgegangen ist, mit Licht, das durch eines der anderen Objektive hindurchgegangen ist, am Objekt und/oder an mindestens einem der Lichtdetektoren kohärent überlagert wird, so daß es interferiert.

Vorzugsweise sind in dem aus der DE-OS 43 26 473 bekannten Rasterlichtmikroskop zwei Objektive so angeordnet, daß ihre Achsen senkrecht aufeinander stehen, und das eine Objektiv wird für die Beleuchtung der Probe verwendet, während das zweite Objektiv für die Beobachtung der Probe verwendet wird. Durch die senkrechte Anordnung der Beleuchtungsachse, die durch die optische Achse des für die Beleuchtung verwendeten Objektivs bestimmt wird, zu der Beobachtungsachse, die durch die optische Achse des für die Beobachtung verwendeten Objektivs bestimmt wird, wird eine Verbesserung der Auflösung erreicht.

Die hohe Auflösung kommt auf folgende Weise zustande: Die Intensitätsverteilung im Fokalbereich wird durch die Beleuchtungs-Punktverwaschungsfunktion (PVF) beschrieben. Die Detektionswahrscheinlichkeit für das vom Fokalbereich ausgehende Licht wird bei Verwendung einer Detektionslochblende von der Beobachtungs-PVF beschrieben. Die PVF eines konfokalen Mikroskops ist das Produkt der Beleuchtungs- und der Beobachtungs-PVF. Je ausgedehnter sie ist, desto schlechter ist die Auflösung des Mikroskops. Durch die annähernd senkrechte Anordnung der Beleuchtungs- und Beobachtungsachsen zueinander wird die große Ausdehnung der Beleuchtungs-PVF längs ihrer Achse durch die geringe Ausdehnung der Beobachtungs-PVF längs dieser Achse kompensiert, so daß längs aller drei Raumachsen eine etwa gleich gute Auflösung erreicht wird.

Gemäß einer weiteren Ausführungsform des aus der DE-OS 43 26 473 bekannten Rasterlichtmikroskops sind drei Objektive so angeordnet, daß die Achsen zweier Objektive senkrecht aufeinander stehen, während die Achse des dritten Objektivs auf der Achse eines der beiden anderen Objektive liegt. Dabei wird Licht, das durch eines der Objektive hindurchgegangen ist, mit Licht, das durch eines der anderen Objektive hindurchgegangen ist, am Objekt und/oder an einem der Lichtdetektoren kohärent überlagert, so daß es interferiert. Die hohe Auflösung kommt in dem Fall der Interferenz des Beleuchtungslichts auf folgende Weise zustande: Die Beleuchtungs-PVF wird durch die interferenz der beiden aus entgegengesetzten Richtungen eintreffenden Beleuchtungsstrahlen längs der Beleuchtungsachse durch ein Interferenzmuster moduliert, sofern die Beleuchtungsstrahlen kohärent sind. Ist die Phasendifferenz zwischen den beiden Beleuchtungsteilstrahlen im Brennpunkt gleich null oder ein ganzzahliges Vielfaches von 2¹, so ist die Interferenz im geometrischen Brennpunkt konstruktiv und die Beleuchtungs-PVF besteht aus einem räumlich stärker begrenzten Hauptmaximum und mehreren Nebenmaxima längs der Beleuchtungsachse, welche die Auflösung herabsetzen würden, wenn sie nicht unterdrückt werden könnten. Die konfokale PVF, die das Produkt der Beleuchtungs-PVF und der Beobachtungs-PVF ist, wird durch die Interferenz ebenfalls längs der Beleuchtungsachse moduliert. Allerdings werden die Nebenmaxima durch die senkrechte Beobachtung durch das dritte Objektiv unterdrückt, so daß die konfokale PVF eine axiale Ausdehnung hat, die im wesentlichen durch die des Hauptmaximums der Beleuchtungs-PVF bestimmt wird. Dies ist mit einer hohen Auflösung gleichbedeutend.

Des weiteren ist aus der Deutschen Patentanmeldung 196 29 725.7 ein Doppelobjektiv-System mit zwei Objektiven bekannt, von denen das eine zur Fokussierung von Beleuchtungslicht und das andere zur Sammlung von Beobachtungslicht dient, wobei die Beobachtungsachse des zweiten Objektivs unter einem Winkel zur Beleuchtungsachse des ersten Objektivs steht. Dadurch wird gemäß dem in der DE-OS 43 26 473 beschriebenen optischen Prinzip eine Auflösungsverbesserung erreicht. Im Gegensatz zu dem in der DE-OS 43 26 473 beschriebenen Aufbau mit vollständiger Trennung der Beleuchtungs- und Beobachtungsstrahlengänge erlaubt das Doppelobjektiv-System aus der Patentanmeldung 196 29 725.7 die Realisierung des in der DE-OS 43 26 473 beschriebenen optischen Prinzips bei einem verfügbaren Lichtmikroskop. Hierbei ist das herkömmliche Einzelobjektiv bei dem konventionellen Lichtmikroskop gegen das Doppelobjektiv-System auszutauschen.

Im Gegensatz hierzu wird bei der vorliegenden Erfindung ein Weg aufgezeigt, wie das in der DE-OS 43 26 473 beschriebenen optische Prinzip in einem verfügbaren Rastertichtmikroskop mit nur einem Objektiv realisiert werden kann.

Die Erfindung wird durch die Merkmale des Anspruchs 1 definiert.

Die der vorliegenden Erfindung,zugrundeliegende Aufgabe besteht also darin, eine Strahlumlenkeinheit vorzuschlagen, welche einerseits die Beleuchtung der Probe mit einem oder mehreren Strahlen von mehreren Seiten und/oder die Beobachtung der Probe mit einem oder mehreren Strahlen von mehreren Seiten, andererseits die Beobachtung der Probe in einem Winkel von etwa 90° zur Beleuchtungsachse erlaubt, wodurch die erreichbare Auflösung gemäß dem in der DE-OS 43 26 473 beschriebenen optischen Prinzip verbessert wird und das konfokale Beobachtungsvolumen kleiner als in den bekannten vergleichbaren Rasterlichtmikroskopen ist. Die Aufgabe ist es, die Strahlumlenkeinheit so zu entwerfen, daß sie in verfügbaren Rasterlichtmikroskopen mit einem Objektiv eingesetzt werden kann.

Diese Aufgabe wird erfindungsgemäß dadurch gelöst, daß die Umlenkelemente (Spiegel) zwischen dem Mikroskopobjektiv und der Brennebene derart angeordnet sind, daß ein in das Objektiv einfallender kollimierter Lichtstrahl je nach Einfallswinkel in der Eintrittsapertur des Objektivs die Probe im Brennpunkt aus einer unterschiedlichen Richtung beleuchtet (diese Richtung ist die Beleuchtungsachse) und ein vom Brennpunkt ausgehendes Strahlenbündel je nach Richtung (diese Richtung ist die Beobachtungsachse) das Objektiv als kollimierter Lichtstrahl unter einem unterschiedlichen Ausfallswinkel verläßt.

Erfindungsgemäß sind die Umlenkelemente in den Strahlengängen hinsichtlich der angestrebten hohen Auflösung so angeordnet, daß die Beleuchtungsachse und die Beobachtungsachse senkrecht aufeinander stehen. Jedoch werden die Vorteile der Erfindung in ausreichendem Maße auch dann noch erzielt, wenn der Winkel in nicht zu großem Maße von einem rechten Winkel abweicht. Vorzugsweise sind die Umlenkelemente baulich zu einer Strahlumlenkeinheit zusammengefaßt.

Die erfindungsgemäße Strahlumlenkeinheit kann in einem Fluoresienzmikroskop eingesetzt werden. Sie kann aber auch in einem Mikroskop eingesetzt werden, das mit Streulicht arbeitet.

Vorteilhafterweise handelt es sich bei dem verwendeten Objektiv um ein Objektiv mit hoher numerischer Apertur, das nicht für die Verwendung von Deckgläsern korrigiert ist. Vorzugsweise werden die Proben dann an der Spitze einer dünnen Kapillare bereitgestellt. Bei Verwendung eines Objektivs, das für die Verwendung von Deckgläsern korrigiert ist, kann ein Deckglas zwischen das Objektiv und die erfindungsgemäße Strahlumlenkeinheit bzw. die Probe eingebracht werden. Bei Verwendung eines Objektivs, für das ein lmmersionsmedium verwendet werden muß, kann der Raum zwischen Objektiv und Probe mit einem lmmersionsmedium aufgefüllt werden.

Vorteilhafterweise befindet sich die Strahlumlenkeinheit auf einem Objektträger, der auf dem Objekttisch des Mikroskops angebracht ist. Dadurch kann die Strahlumlenkeinheit durch Bewegen des Objekttischs justiert werden. Die Bewegung der Probe erfolgt vorteilhafterweise mit einem zusätzlichen, vom Objekttisch unabhängigen Verstellelement. Bei diesem Verstellelement kann es sich um einen Verstelltisch handeln, der die Rasterung der Probe durch den Brennpunkt in drei Dimensionen erlaubt, wodurch eine ein- oder mehrdimensionate Aufnahme der Probe mit hoher Auflösung möglich ist.

Die Erfindung wird nachstehend anhand der beigefügten Zeichnungen näher erläutert. Es zeigen:

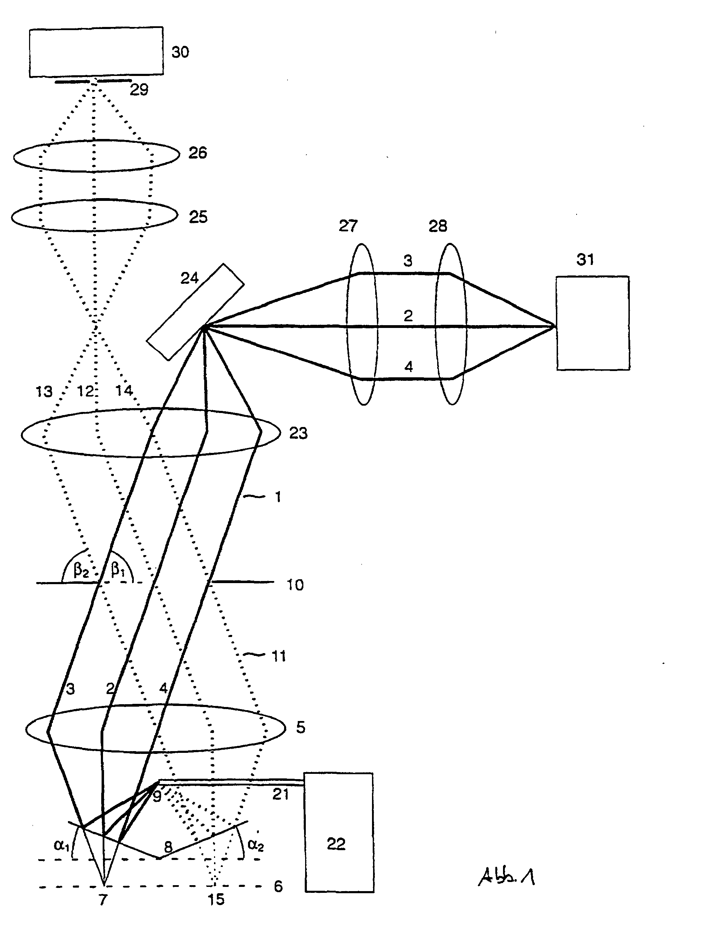

Abb. 1 - Die schematische Darstellung des Strahlengangs in einer besonders bevorzugten Ausführungsform der erfindungsgemäßen Strahlumlenkeinheit, wobei die Probe aus einer Richtung beleuchtet wird und die Beobachtung senkrecht zur Beleuchtungsachse erfolgt, wobei der rechte Winkel in einer Ebene liegt, welche die optische Achse des Objektivs enthält.

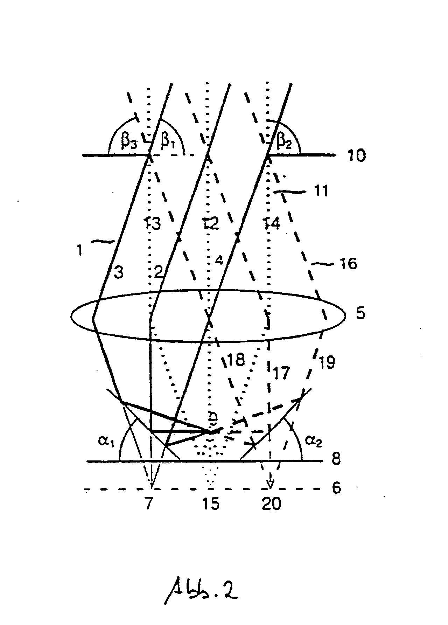

Abb. 2 - Die schematische Darstellung des Strahlengangs in einer besonders bevorzugten Ausführungsform der erfindungsgemäßen Strahlumlenkeinheit, wobei die Probe aus zwei entgegengesetzten Richtungen befeuchtet wird und die Beobachtung senkrecht zur Beleuchtungsachse erfolgt.

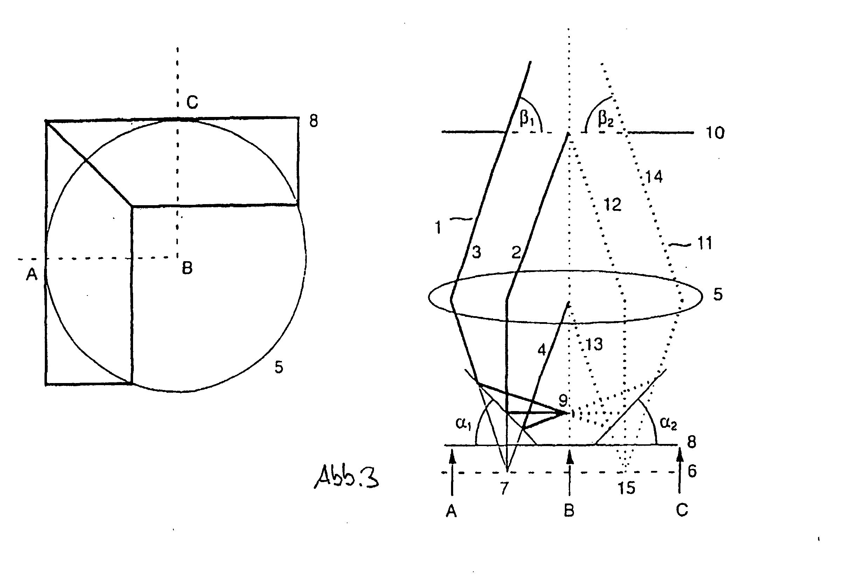

Abb. 3 - Die schematische Darstellung des Strahlengangs in einer besonders bevorzugten Ausführungsform der erfindungsgemäßen Strahfumlenkeinheit, wobei die Probe aus einer Richtung beleuchtet wird und die Beobachtung senkrecht zur Beleuchtungsachse erfolgt, wobei der rechte Winkel in einer Ebene liegt, auf der die optische Achse des Objektivs senkrecht steht.

Abb. 1 stellt die Anordnung der erfindungsgemäßen Strahlumlenkeinheit für eine bevorzugte Ausführungsform dar, bei der die Beleuchtungs- und Beobachtungsachsen senkrecht aufeinander stehen, wobei der rechte Winkel zwischen ihnen in einer Ebene liegt, welche die optische Achse des Objektivs enthält. Der Beleuchtungsstrahlengang 1 von einer Lichtquelle 31 über eine Beleuchtungsoptik 27,28 und einen Spiegel 24 sowie Linse 23 wird durch drei durchgezogene Strahlen dargestellt: ein zentraler Strahl 2 und zwei Randstrahlen 3 und 4. Der Beleuchtungsstrahl wird durch das Mikroskopobjektiv 5 in die Brennebene 6 fokussiert und die einzelnen Strahlen 2, 3 und 4 würden sich ohne Strahlumlenkeinheit in der Brennebene 6 in einem Punkt 7 schneiden. Dieser Strahlverlauf ist teilweise mit dünnen Linien.gezeichnet. Wird zwischen dem Objektiv 5 und der Brennebene 6 die erfindungsgemäßen Strahlumlenkeinheit 8, bestehend aus mindestens zwei die Strahlrichtung verändernden Spiegelflächen, die unter Winkeln α1, α2 zur Senkrechten zur optischen Achse des Objektives 5 liegen, eingebracht, so werden die Strahlen 2, 3 und 4 reflektiert und treffen in einem Punkt 9 zusammen. Der zentrale Strahl 2 zeigt die Lage der Beleuchtungsachse an.

Tritt der kollimierte Beleuchtungsstrahl schräg in die Eintrittsapertur 10 des Mikroskopobjektivs 5 ein (Einfallswinkel β₁), so liegt der virtuelle Brennpunkt 7 in der Brennebene 6 nicht auf der optischen Achse des Objektivs 5. Durch einen entsprechenden Abstand der Strahiumlenkeinheit 8 von der Brennebene 6 und einen entsprechenden Neigungswinkel α₁ der Strahlumlenkeinheit 8 kann erreicht werden, daß der Brennpunkt 9 beispielsweise auf der optischen Achse des Objektivs 5 liegt.

Der Beobachtungsstrahlengang 11 kann teilweise symmetrisch zu dem Beleuchtungsstrahlengang 1 aufgebaut werden (mit punktierten Linien dargestellt). Der von dem Beleuchtungsbrennpunkt 9 ausgehende zentrale Strahl 12, der die Lage der Beobachtungsachse zeigt, und die Randstrahlen Strahlen 13 und 14 treffen auf die erfindungsgemäße Strahlumlenkeinheit 8 und werden dort reflektiert. Sie werden durch einen entsprechenden Abstand der Strahlumlenkeinheit 8 von der Brennebene 6 und einen entsprechenden Neigungswinkel α₂ der Strahlumlenkeinheit 8 von dem Mikroskopobjektiv 5 kollimiert. Die Strahlen 12, 13 und 14 treten unter einem Ausfallswinkel β₂ durch die Austrittsapertur des Objektivs 5 und gelangen über Linse 23 sowie Optik 25,26 auf einen Detektor 30 mit vorgeordnetem Pinhole 29. Ohne Strahlumlenkeinheit würden sich die Strahlen 12, 13 und 14 in der Brennebene 6 in einem Punkt 15 schneiden. Dieser Strahlverlauf ist mit dünnen Linien gezeichnet.

Vorteilhafterweise ist der Aufbau symmetrisch, und α₁ und α₂ haben den gleichen Betrag. Betragen die Winkel α₁ und α₂ jeweils 22,5°, so treffen die zentralen Strahlen 2 und 12, welche die Beleuchtungsachse und die Beobachtungsachse definieren, in einem rechten Winkel aufeinander.

Der Brennpunkt 9 muß nicht auf der optischen Achse des Mikroskopobjektivs 5 liegen, damit Beleuchtungsachse und Beobachtungsachse senkrecht aufeinander stehen. In diesem Fall verliert der Aufbau seine Symmetrie. Ein symmetrischer Aufbau ist wegen des großen Abstands des Brennpunkts 9 von den Spiegelflächen der Strahlumlenkeinheit 8 vorteilhaft.

Die Strahlumlenkeinheit 8 ist vorzugsweise beweglich, so daß die Lage der Beleuchtungs- und Beobachtungsbrennpunkte justiert werden kann. Vorteilhafterweise können die Neigungswinkel α₁ und α₂ verändert werden.

Die Beleuchtungs- und Beobachtungsstrahlengänge treffen unter einem Einfallswinkel β₁ und einem Ausfallswinkel β₂ in die Eintritts- bzw. Austrittsapertur 10 des Mikroskopobjektivs 5 ein. Vorzugsweise ist der Betrag dieser Winkel gleich. Der Verlauf der Beleuchtungs- und Beobachtungsstrahlengänge entspricht dem Verlauf der Strahlengänge bei Strahlrasterung in einem verfügbaren Rasterlichtmikroskop. Üblicherweise haben in einem solchen Mikroskop die Beleuchtungs- und Beobachtungsstrahlengänge denselben Verlauf. Die Trennung der beiden Strahlengänge bei Verwendung der erfindungsgemäßen Strahlumienkeinheit kann beispielsweise durch die geeignete Verschiebung der (nicht eingezeichneten) Punktbeleuchtungsquelle und des (nicht eingezeichneten) Punktdetektors erfolgen.

Die zu untersuchende Probe befindet sich im gemeinsamen Brennpunkt 9 der Beleuchtungs- und Beobachtungsstrahlengänge. Eine vollständige ein-, zweioder dreidimensionale Aufnahme der Probe erfolgt entweder durch Rasterung der Probe (Objektrasterung) oder durch Rasterung des gemeinsamen Brennpunkts 9 durch die Probe (Strahlrasterung). Falls Objektrasterung längs einer oder mehrerer Achsen durchgeführt wird, befindet sich die Probe auf einem Tisch 21, hier an einem Halter 21 der die vorteilhafterweise beliebige Translation und/oder Rotation der Probe über einen Scantisch 22 erlaubt. Falls Strahlrasterung vorgesehen ist, bewegt die Rastereinheit des verfügbaren Mikroskops die Beleuchtungs- und Beobachtungsstrahlengänge in bekannter Weise so, daß Beleuchtungs- und Beobachtungsbrennpunkt unter kontrollierten Bedingungen durch die Probe bewegt werden. Objekt- und Strahlrasterung können kombiniert werden.

Ein verfügbares Mikroskop, das mit dieser Ausführungsform der erfindungsgemäßen Strahlumlenkeinheit ausgerüstet ist, erlaubt gemäß dem Prinzip des bekannten Rasterlichtmikroskops, das in der DE-OS 43 26 473 beschrieben ist, Aufnahmen mit der höchsten Auflösung, die ein Fernfeld-Lichtmikroskop ohne die Benutzung von Interferenz haben kann.

Abb. 2 stellt die Anordnung der erfindungsgemäßen Strahlumlenkeinheit für eine bevorzugte Ausführungsform dar, bei der die Probe aus zwei entgegengesetzten Richtungen beleuchtet wird und die Beobachtung senkrecht zur Beleuchtungsachse erfolgt. In diesem Fall wird die Interferenz der Beleuchtungslichtstrahlen im Fokalbereich zur Verbesserung der Auflösung ausnutzt.

Ein Beleuchtungsstrahlengang 1 wird wie in Abb. 1 durch drei durchgezogene Strahlen 2, 3 und 4 dargestellt. Der schräg in die Eintrittsapertur 10 eintretende Beleuchtungsstrahl (Einfallswinkel β₁) wird durch das Mikroskopobjektiv 5 fokussiert. Durch die erfindungsgemäße Strahlumlenkeinheit 8 werden die Strahlen 2, 3 und 4 reflektiert und treffen in einem Punkt 9 zusammen. Ein zweiter Beleuchtungsstrahlengang 16 wird durch drei gestrichelte Strahlen 17, 18 und 19 dargestellt. Er tritt ebenfalls schräg in die Eintrittsapertur 10 ein (Einfallswinkel β₃) und wird durch das Objektiv 5 auf einen virtuellen Brennpunkt 20 in der Brennebene 6 fokussiert. Durch die erfindungsgemäße Strahlumlenkeinheit 8 werden die Strahlen 17, 18 und 19 reflektiert und treffen durch einen entsprechenden Abstand der Strahlumlenkeinheit 8 von der Brennebene 6 und einen entsprechenden Neigungswinkel α₂ der Strahlumlenkeinheit 8 im Beleuchtungsbrennpunkt des ersten Strahlengangs 9 zusammen.

Der Beobachtungsstrahlengang 11 wird wie in Abb. 1 punktiert dargestellt. Die von dem gemeinsamen Beleuchtungsbrennpunkt 9 ausgehende Strahlen 12, 13 und 14 werden durch die erfindungsgemäße Strahlumlenkeinheit 8 in einem entsprechenden Abstand von der Brennebene 6 reflektieft und werden durch das Mikroskopobjektiv 5 kollimiert.

Vorteilhafterweise ist der Aufbau symmetrisch, und α₁ und α₂ haben den gleichen Betrag. Betragen die Winkel α₁ und α₂ jeweils 45°, so treffen die zentralen Strahlen 2 und 17, welche die beiden Beleuchtungsachsen definieren, im Beleuchtungsbrennpunkt 9 entgegengesetzt aufeinander. Ist der Winkel α₂ = 0°, so entspricht der Aufbau einer Ausführungsform der erfindungsgemäßen Strahlumlenkeinheit gemäß Abb. 1.

Die Beleuchtungsstrahlengänge treffen unter Einfallswinkeln β₁ und β₃ in die Eintrittsapertur 10 des Mikroskopobjektivs 5 ein. Vorzugsweise ist der Betrag dieser Winkel gleich. Der Beobachtungsstrahlengang verläßt die Austrittsapertur 10 des Objektivs 5 unter einem Ausfallswinkel β₂. Vorzugsweise beträgt dieser Winkel 90°. Der Verlauf der beiden Beleuchtungsstrahlengänge entspricht dem Verlauf bei Strahlrasterung in einem verfügbaren Rasterlichtmikroskop. Die Trennung der beiden Beleuchtungsstrahlengänge bei Verwendung der erfindungsgemäßen Strahlumlenkeinheit kann beispielsweise durch eine Doppelpunktbeleuchtungsquelle oder durch ein Prisma im gemeinsamen Beleuchtungsstrahlengang innerhalb des Mikroskops erfolgen.

Beleuchtung und Beobachtung können auch vertauscht werden: Die Beleuchtungsstrahlengänge können auch als Beobachtungsstrahlengänge verwendet werden und der Beobachtungsstrahlengang als Beleuchtungsstrahlengang, wodurch die Probe aus zwei entgegengesetzten Richtungen senkrecht zur Beleuchtungsachse beobachtet wird.

Die zu untersuchende Probe befindet sich wie in Abb. 1 im gemeinsamen Brennpunkt 9 der Beleuchtungs- und Beobachtungsstrahlengänge. Eine ein-, zwei- oder dreidimensionale Aufnahme der Probe erfolgt vorzugsweise durch Objektrasterung längs einer oder mehrerer Achsen.

Ein verfügbares Mikroskop, das mit dieser Ausführungsform der erfindungsgemäßen Strahlumlenkeinheit ausgerüstet ist, erlaubt gemäß den Prinzipien der bekannten Rasterlichtmikroskope, die in den DE-OS 40 40 441 und DE-OS 43 26 473 beschrieben sind, Aufnahmen mit höchster Auflösung unter Verwendung von Interferenz.

Abb. 3 stellt die Anordnung der erfindungsgemäßen Strahlumlenkeinheit für eine bevorzugte Ausführungsform dar, bei der die Beleuchtungs- und Beobachtungsachsen senkrecht aufeinander stehen, wobei der rechte Winkel in einer Ebene liegt, auf der die optische Achse des Objektivs senkrecht steht. Die Abbildung stellt eine Sicht der Ausführungsform von oben (längs der optischen Achse des Objektivs) dar (links) und eine Sicht der Ausführungsform von der Seite (wie in Abb. 1 und 2), wobei der Schnitt längs der in der linken Ansicht gestrichelt dargestellten Linie ABC erfolgt.

Die Beleuchtungs- und Beobachtungsstrahlengänge 1 und 11 sind wie in Abb. 1 dargestellt. Der kollimierte Beleuchtungsstrahl (2, 3 und 4) tritt schräg in die Eintrittsapertur 10 des Objektivs 5 ein (Einfallswinkel β₁). Durch die Ablenkung der Beleuchtungsstrahlen 2, 3 und 4 durch die erfindungsgemäße Strahlumlenkeinheit 8 wird das Licht durch das Objektiv 5 in den Beleuchtungsbrennpunkt 9 fokussiert. Dabei erfolgt die Ablenkung so, daß der zentrale Strahl 2 nach der Reflexion senkrecht zur optischen Achse des Objektivs 5 verläuft.

Die von dem Beleuchtungsbrennpunkt 9 ausgehenden Beobachtungsstrahlen 12, 13 und 14 werden von der Strahlumlenkeinheit 8 reflektiert und vom Objektiv 5 kollimiert. Der Verlauf der Beobachtungsstrahlen 12, 13 und 14 entspricht dem Verlauf der Beleuchtungsstrahlen 2, 3 und 4. Die Beobachtung erfolgt dabei so, daß der zentrale Beobachtungsstrahl 12 zwischen dem Brennpunkt 9 und dem Auftreffen auf die Strahlumlenkeinheit 8 senkrecht zu dem zentralen Beleuchtungsstrahl 2 und senkrecht zur optischen Achse des Objektivs 5 verläuft. Der rechte Winkel zwischen Beleuchtungs- und Beobachtungsachse ist also der Winkel CAB.

Die Beobachtungsstrahlen treten unter einem Ausfallswinkel β₂ durch die Austrittsapertur 10. Der Ausfallswinkel β₂ liegt im Gegensatz zu der Ausführungsform in Abb. 1 nicht in der Ebene, die den Einfallswinkel β₁ enthält (Ebene, die durch Punkt A und die optische Achse des Objektivs aufgespannt wird), sondern in der Ebene, die durch Punkt C und die optische Achse aufgespannt wird.

in dieser besonderen Ausführungsform haben die Winkel α₁ und α₂ den gleichen Betrag. Ebenso haben die Winkel β₁ und β₂ den gleichen Betrag.

Diese besondere Ausführungsform kann durch Erweiterung der Strahlumlenkeinheit leicht dahingehend ausgedehnt werden, daß sich drei oder vier Strahlengänge in dem Brennpunkt 9 treffen. Dazu werden gegenüber der um α₁ oder α₂ geneigten Umlenkelemente (Spiegelflächen) eine oder zwei weitere (geneigte) Umlenkelemente hinzugefügt. Durch Kombination der Ausführungsformen in Abb. 2 und Abb. 3 können auch fünf Strahlengänge so geführt werden, daß sie sich in ihrem gemeinsamen Brennpunkt 9 treffen. Dabei können die Strahlengänge als Beleuchtungs- oder als Beobachtungsstrahlengänge verwendet werden.

Der Verlauf der Beleuchtungs- und Beobachtungsstrahlengänge in dieser besonderen Ausführungsform entspricht ebenfalls dem Verlauf der Strahlengänge bei Strahlrasterung in einem verfügbaren Rasterlichtmikroskop. Die Trennung der Strahlengänge kann beispielsweise durch die geeignete Verschiebung der (nicht eingezeichneten) Punktbeleuchtungsquelle oder des (nicht eingezeichneten) Punktdetektors erfolgen.

## Patentansprüche

1. Anordnung zur Rasterlichtmikroskopie, bestehend aus optischen Elementen, die einen Beleuchtungs- und einen Detektionsstrahlengang definieren und einem Mikroskopobjektiv, das sowohl der Beleuchtung als auch der Beobachtung einer Probe dient, **dadurch gekennzeichnet, daß** sich zwischen dem Mikroskopobjektiv und seiner objektseitigen Brennebene eine Strahlumlenkeinheit befindet, so dass die Beleuchtung der Probe aus einer oder mehreren Richtungen und / oder die Beobachtung der Probe aus einer oder mehreren Richtungen erfolgt und die Beobachtung der Probe in einem Winkel von etwa 90 Grad zur jeweiligen Beleuchtungsrichtung erfolgt.

2. Anordnung zur Rasterlichtmikroskopie nach Anspruch 1, **dadurch gekennzeichnet, daß** die Strahlumlenkeinheit um die optische Achse des Mikroskops gedreht wird.

3. Anordnung zur Rasterlichtmikroskopie nach einem der vorhergehenden Ansprüche, **dadurch gekennzeichnet, dass** der Winkel zwischen der Beleuchtungsachse und der Beobachtungsachse variiert wird.

4. Anordnung zur Rasterlichtmikroskopie nach einem der vorhergehenden Ansprüche, **dadurch gekennzeichnet, daß** zwei Strahlengänge so umgelenkt werden, daß ihre Achsen im Brennpunkt des Mikroskopobjektivs kollinear sind, so daß das Licht aus entgegengesetzten Richtungen eintrifft oder aus entgegengesetzten Richtungen beobachtet wird.

5. Anordnung zur Rasterlichtmikroskopie nach einem der vorhergehenden Ansprüche, **dadurch gekennzeichnet, daß** die optischen Elemente variiert und / oder verschoben werden.

6. Anordnung zur Rasterlichtmikroskopie, **gekennzeichnet durch** eine konfokale Anordnung.

7. Anordnung zur Rasterlichtmikroskopie nach einem der vorangehenden Ansprüche zur Fluoreszenzmikroskopie.

8. Anordnung zur Rasterlichtmikroskopie, nach einem der vorangehenden Ansprüche, zur Beobachtung von Streu- und / oder Reflexionslicht .

## Claims

1. Arrangement for scanning light microscopy, consisting of optical elements, which define an illumination beam path and a detection beam path, and of a microscope lens which is used both to illuminate and also to observe a sample, **characterised in that** located between the microscope lens and its object-side focal plane is a beam deflecting unit, so that the sample is illuminated from one or several directions and/or the sample is observed from one or several directions and the sample is observed at an angle of about 90° with respect to the respective illumination direction.

2. Arrangement for scanning light microscopy as claimed in claim 1, **characterised in that** the beam deflecting unit is rotated about the optical axis of the microscope.

3. Arrangement for scanning light microscopy as claimed in any one of the preceding claims, **characterised in that** the angle between the illumination axis and the observation axis is varied.

4. Arrangement for scanning light microscopy as claimed in any one of the preceding claims, **characterised in that** two beam paths are deflected in such a manner that their axes are collinear in the focal point of the microscope lens, so that the light arrives from opposite directions or is observed from opposite directions.

5. Arrangement for scanning light microscopy as claimed in any one of the preceding claims, **characterised in that** the optical elements are varied and/or displaced.

6. Arrangement for scanning light microscopy, **characterised by** a confocal arrangement.

7. Arrangement for scanning light microscopy as claimed in any one of the preceding claims for fluorescence microscopy.

8. Arrangement for scanning light microscopy as claimed in any one of the preceding claims for observing scattered and/or reflection light.

## Revendications

1. Agencement pour la microscopie lumineuse de trame, constitué d'éléments optiques qui définissent un trajet de rayons d'éclairage et de détection, et d'un objectif de microscope qui sert à la fois à l'éclairage et aussi à l'observation d'un échantillon, **caractérisé en ce que**, entre l'objectif du microscope et son plan focal côté objet, se trouve une unité de déviation de faisceau de telle sorte que l'éclairage de l'échantillon a lieu à partir d'une ou de plusieurs directions et/ou l'observation de l'échantillon à partir d'une ou de plusieurs directions, et **en ce que** l'observation de l'échantillon a lieu selon un angle d'environ 90 degrés à la direction d'éclairage respective.

2. Agencement pour la microscopie lumineuse de trame selon la revendication 1, **caractérisé en ce que** l'unité de déviation de faisceau est amenée à tourner autour de l'axe optique du microscope.

3. Agencement pour la microscopie lumineuse de trame selon l'une des revendications précédentes, **caractérisé en ce que** l'angle entre l'axe d'éclairage et l'axe d'observation est amené à varier.

4. Agencement pour la microscopie lumineuse de trame selon l'une des revendications précédentes, **caractérisé en ce que** deux trajectoires de rayons sont déviées de façon que leurs axes soient congruents au point focal de l'objectif de microscope de telle sorte que la lumière est incidente depuis des directions opposées ou est observée de directions opposées.

5. Agencement pour la microscopie lumineuse de trame selon l'une des revendications précédentes, **caractérisé en ce que** les éléments optiques sont amenés à varier et/ou sont déplacés.

6. Agencement pour la microscopie lumineuse de trame, **caractérisé par** un agencement à foyer commun.

7. Agencement pour la microscopie lumineuse de trame selon l'une des revendications précédentes, pour la microscopie à fluorescence.

8. Agencement pour la microscopie lumineuse de trame, selon l'une des revendications précédentes, pour l'observation de la lumière diffusée et/ou de réflexion.
